# EUROPEAN PATENT APPLICATION

(11) **EP 1 089 199 A2**
(43) Date of publication of application: **04.04.2001**
(21) Application number: 00308031.4
(22) Date of filing: 15.09.2000
(51) Int. Cl.: G06F 17/30

(54) **Media time management information describing method, multimedia information processing apparatus, and multimedia information processing method**

(30) Priority: 17.09.1999 JP 26355199
(71) Applicant: KABUSHIKI KAISHA TOSHIBA, Kawasaki-shi, Kanagawa-ken 210-8572 (JP)
(72) Inventor: Hori, Osamu, c/o Intellectual Property Division, Minato-ku, Tokyo 105-8001 (JP); Kaneko, Toshimitsu, Intellectual Property Division, Minato-ku, Tokyo 105-8001 (JP); Mita, Takeshi, Intellectual Property Division, Minato-ku, Tokyo 105-8001 (JP); Yamamoto, Koji, Intellectual Property Division, Minato-ku, Tokyo 105-8001 (JP)
(74) Representative: Midgley, Jonathan Lee

(57) **Abstract**

The media time management information describing method is used to describe media time management information for a mutual time relation of six media including associated visual data 1 (204), audio data 1 (206), and thumbnail 1 (208), and associated visual data 2 (205), audio data 2 (207), and thumbnail 2 (209). For these six media, there are described identification information on the media, time type managing the media, information indicating the presence interval of the media managed by employing the time type, a mutual conversion formula or conversion table between the local time and an absolute time common to the above six media as required, and/or a mutual conversion formula or conversion table between the local time and a local time of the other media.

## Description

The present invention relates to a media time management information describing method for a variable reproduction, e.g., for randomly causing intermediate reproduction and trick reproduction of multimedia information having a variety of plural time stamps, a multimedia information processing apparatus, and a multimedia information processing method.

In most conventional videos, there has been a pair of visual data and audio data. In the case where these data are synchronized with each other, and are reproduced, it has been possible to ensure reproduction without shift by employing a predetermined reproduction rate. In recent years, with introduction of a large capacity of disk media such as HDD, CD and DVD, it has been possible to ensure a variable reproduction. In this case as well, both signals are multiplexed so as to obtain synchronization between visual data and audio data. Thus, it has been possible to reproduce visual data and audio data without being shifted.

However, as recent videos, there is increased multimedia videos which are combinations of visual data having a variety of plural different time stamps, still image, and audio data or the like, and time management becomes complicated.

In the conventional videos (provided with a pair of visual data and audio data), it is sufficient if one time code of visual data or audio data is defined as a reference, and reference is made to the other media time code. However, in the case where a plurality of media are combined with each other, the only way to do this is to determine which media is defined as a reference and which media is referred to every time, and very inefficient time management has been forced to be performed.

In addition, in the case where media does not exist continuously like still image or in the case where visual data or audio data exist intermittently in portion of continuous data, the corresponding media (data) may not exist at a specified time.

Further, in the case of randomly accessing media in which a frame rate changes freely as in MPEG-4, it is not easy to calculate the frame momentously using simple calculation like MPEG-2 having a constant frame rate.

Therefore, individual single media differ from each other in method for calculating the time or frame number for intermediate reproduction or method for fetching information. Thus, in the case of creating an application program for variably reproducing a plurality of media, there has occurred a problem that control for making mutual time reference becomes complicated.

Accordingly, it is an object of the present invention to provide a media time management information describing method capable of efficiently managing the time of each media.

It is another object of the present invention to provide a multimedia information processing apparatus capable of efficiently managing the time of each media.

It is further object of the present invention to provide a multimedia information processing method capable of efficiently managing the time of each media.

According to the present invention, there is provided a media time management information describing method for describing media time management information of a plurality of media, the method comprising describing first information indicating a type of time which manages each of the plurality of media; describing second information indicating a time period in which data of each of the plurality of media exits; and describing third information indicating a relation between times of the plurality of media or a relation between a time of each of the plurality of media and a reference time common to the plurality of media.

According to the present invention, there is provided an article of manufacture comprising a computer readable storing medium, the computer readable storing medium comprising a plurality of media data; and media time management information of the plurality of media, the information comprising first information indicating a type of time which manages each of the plurality of media; second information indicating a time period in which data of each of the plurality of media exits; and third information indicating a relation between times of the plurality of media or a relation between a time of each of the plurality of media and a reference time common to the plurality of media.

According to the present invention, there is provided a multimedia information processing apparatus for managing a plurality of media, the apparatus comprising a manager configured to manage media time management information of the plurality of media, the information comprising first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media; and a converter configured to convert times of the plurality of media by using the media time management information.

According to the present invention, there is provided a multimedia information processing method using media time management information comprising first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media, the method comprising receiving an operation request for one of the plurality of media; converting a local time of the one of the plurality of media to another local time of another of the plurality of media when the request cannot be executed by using the local time of the one of the plurality of media; and executing the request.

According to the present invention, there is provided an article of manufacture comprising a computer readable storing medium storing a computer program for processing data by using media time management information comprising first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media, the computer program comprising a program code for receiving an operation request for one of the plurality of media, a program code for converting a local time of the one of the plurality of media to another local time of another of the plurality of media when the request cannot be executed by using the local time of the one of the plurality of media; and a program code for executing the request.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a view showing an example of configuration of a multimedia information processing system according to one embodiment of the present invention;
FIG. 2 is a view for schematically illustrating a function of a media time management table;
FIG. 3 is a view showing an example of a format for the media time management table;
FIG. 4 is a view showing an example of the media time management table in the case where all media are described with an absolute time;
FIG. 5 is a view showing an example of the media time management table in the case where all media are described with a local time;
FIG. 6 is a view showing an example of inter-media time conversion routines;
FIG. 7 is a view showing an example of the media time management method;
FIG. 8 is a view showing another example of the media time management method;
FIG. 9 is a view showing still another example of the media time management method;
FIG. 10 is a view showing still another example of the media time management method;
FIG. 11 is a view showing still another example of the media time management method;
FIG. 12 is a view showing still another example of the media time management method;
FIG. 13 is a flow chart showing an example of the processing steps of inter-media conversion routine when an application program inquires a media time;
FIG. 14 is a flow chart showing a detailed processing steps of the inter-media conversion routine procedures (step S13) of FIG. 13;
FIG. 15 is a view for schematically illustrating a relation between visual data and thumbnail data;
FIG. 16 is a view showing another example of configuration of a multimedia information processing system according to the embodiment of the present invention;
FIG. 17 is a view showing an example of the media time management method for typical multimedia contents;
FIG. 18 is a view showing an example of a GUI utilizing a thumbnail;
FIG. 19 is a view showing another example of the GUI utilizing the thumbnail; and
FIG. 20 is a view showing still another example of the media time management method.

A preferred embodiment of a media time management describing method, multimedia information processing apparatus, and multimedia information processing method according to the present invention will now be described with reference to the accompanying drawings.

First, a description of terms will be given.

A time measure denotes time description employing a unit time in visual data or audio data.

In the present embodiment, the time measure of the visual data is expressed by an hh hours, mm minutes, ss seconds, xx/yy frame.

The above xx/yy utilizes the fact that the number of frames per second is real, and is intended for expressing a portion less than 1 second using the number of frames. In the case where one second corresponds to yy frames, a time corresponding to xx-th frame of yy frames (0 to yy-1 frames) in a range earlier than hh hours, mm minutes, (ss + 1) seconds following hh hours, mm minutes, ss seconds. For example, in the case where the number of frames per second is 30, 0/30 to 29/30 are employed as xx/yy. Even if the number of frames per second is really 30, for example, it is possible to employ 0/120, 4/120, ···, 116/120 when yy is defined as 120.

A portion of the hh hours, mm minutes, ss seconds may be described by developing it to seconds.

In addition, it is possible to describe the xx/yy portion by z (z is a real of 0 ≦ z < 1 having a predetermined effective digit).

The time measure of the audio data is expressed by an hh hours, mm minutes, ss seconds, tt. A portion of the hh hours, mm minutes, ss seconds may be described by developing it to seconds.

A frame number is time description employing a frame number (for example, a sequence number from a first frame) in visual data.

A data of one unit or one block, e.g., visual data, audio data, and thumbnail (still image) is referred to as media. Even with reference to the same visual data, different types of visual data such as videos from different cameras or programs of different channels are regarded as different media. The data of the media is not necessary to be existed successively in time. The data of the media may be intermittently existed in time. Each media is identified by media ID.

In the present embodiment, a group of data including a plurality of media having a predetermined time based relation (for example, multimedia data, digital contents or the like) is managed. This data group may be composed of the same type of media (for example, in the case where the group is comprised of visual data 1 and visual data 2), and may be composed of plural types of media (for example, in the case where the group is composed of visual data 1 and audio data 1). In addition, this data group can include a plurality of media of the same type. For example, one item of multimedia data can be composed of 6 media including a pair of visual data 1/audio data 1 and a thumbnail 1 (including still images obtained from one or plural frames of the visual data 1); and a pair of visual data 2/audio data 2 and a thumbnail 2 (including still images obtained from one or plural frames of visual data 2).

A local time denotes a time specific to the media. This local time can be expressed by a time measure or frame number.

An absolute time is a time that is generally defined for a plurality of media having the above-described time-based mutual relation and that can be converted to the local time of each of the media. The absolute time can be expressed by a time measure or a frame number. In the present embodiment, a description will be given to a case in which a time measure is employed as an absolute time.

A reference time is one of the local times of the plurality of media having the above-described time-based mutual relation or a time (e.g., an absolute time) which is not equal to any of the local times of the plurality of media. In the present embodiment, a description will be given to a case in which an absolute time is employed for a reference time.

A real world time denotes a time in this real world (Greenwich Mean Time, for example).

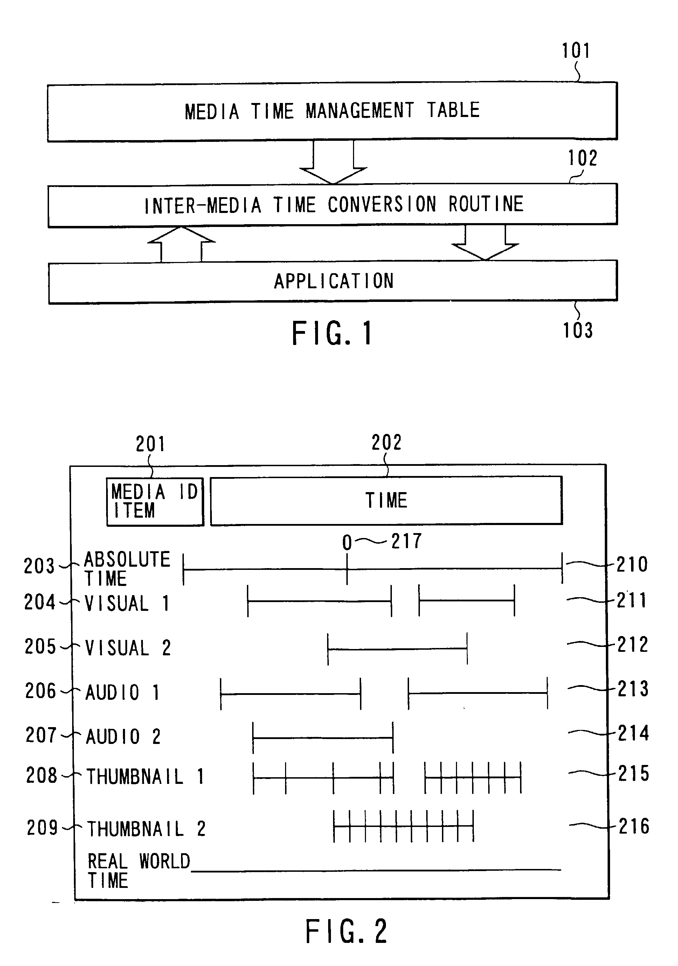

FIG. 1 shows an example of configuration of a multimedia information processing system according to one embodiment of the present invention. In the figure, CPU or memory, an external storage device or network communication apparatus provided as required, and driver software or software such as operating system (OS) used as required are omitted here.

A media time management table 101 contains information for managing a time-based mutual relation between a plurality of media contained in one data group.

Basically, an application program 103 receives an operation request for multimedia data or the like from a user by employing a user interface such as GUI; and requests the corresponding operation (for example, random intermediate reproduction or trick reproduction and the like) from the corresponding part of the corresponding media for the corresponding video driver or audio driver and the like (not shown).

For example, in the case where some still images included in the aforementioned thumbnail 1 are presented, the user selects a desired still image from among these images and supplies an instruction so as to generally reproduce visual data 1 from a portion of visual data 1 corresponding to the selected still image, the local time of visual data 1 corresponding to the local time of the selected still image is specified for a video driver, thereby requesting normal reproduction (the video driver that receives this request reproduces visual data 1 from the specified frame number for example, depending on the specification).

Here, in the case where the local time of the other target media is not obtained from the local time of the media which is specified by the user when the application program 103 issues a request to a driver according to the user instruction as described above (for example, in the case where the visual data 1 has a local time different from that of the visual data 2 and when the user selects a still image from the thumbnail 1, and supplies an instruction so as to reproduce visual data 2 from a frame having the time corresponding to the still image), the application program 103 inquires an inter-media time conversion routine 102 and the inter-media time conversion routine 102 calculates the local time of the other target media corresponding to the local time of the media which is specified by the user.

The inter-media time conversion routine 102 performs inter-media time conversion with regard to the local time of the media which is specified by the user by referring to the media time management table 101 (by reading a conversion formula or conversion table from the media time management table 101), and returns the converted time as an answer. This routine may enable to return an absolute time.

The application program 103 utilizes the received time information (local time measure or frame number) to make a request for a driver, thereby directly accessing a desired frame of desired media and achieving intermediate reproduction or the like. The application program 103 may enable to make a request for employing desired media or the like.

Now, the media time management table 101 will be described.

FIG. 2 is a view schematically illustrating the media time management table 101.

That is, in FIG. 2, schematically expressed is the time-based mutual relation of each medium when an absolute time is used as a reference time. Actually, the inter-media time-based relation is expressed by the conversion formula or conversion table as shown later. In particular, in the case where an absolute time is used as a reference time, the absolute time exists in the conversion formula or conversion table.

An item 201 of media ID represents identification information for identifying each medium (data) such as visual data, audio data, or still image (thumbnail) managed by application programs.

An item of time 202 schematically illustrates a time-based relative relation between media, and 211 to 216 each denotes the local time of each medium.

As described above, it is possible to use the absolute time 203 or any of the local times 211 to 216 as the reference time. However, it is often more convenient to use the absolute time irrelevant to media as the reference time in consideration of an increase in media later. In any case, the reference time may be determined depending on application programs.

The absolute time 203 has a reference point 0 (217), and can have a scale in the positive and negative directions. However, the absolute time can have a scale in the positive direction only.

In the present embodiment, there is described the use of a unit of the previously exemplified hh time, mm minutes, ss second, xx/yy frame as a scale of the absolute time 203 for the visual data. For the audio data, a unit of the previously exemplified hh time, mm minutes, ss second, tt is used. As described above, the yy represents the number of frames per second.

In consideration of the fact that the absolute time 203 can be converted to the local times of plural media in which the number of frames per second is different from each other, a sufficiently large value may be employed as yy in order to express a mutual relation with the local time of each medium with sufficient precision. Alternatively, yy may be adjusted to media having the largest frames per second. Alternatively, yy may be the least common multiple for the number of frames (frame rate) of each medium.

In addition, when media to be newly managed are added in addition to media to be managed in advance, the minimum unit of the scale of the absolute time 203 may be changed. In this case, expression of the time of each medium is modified according to the minimum unit of the absolute time 203 as required (the yy value of the xx/yy handing a frame number is adjusted to the minimum unit of the absolute time).

In the same manner as that described above, the above xx/yy may be real instead of a fraction.

Of course, in the present embodiment, with respect to a scale of the absolute time 203, it is possible to employ another unit representative of a time without being limited to a unit of the xx/yy frame indicating hh hours, mm minutes, ss seconds. For example, an integer corresponding to time may be employed. In addition, as long as a frame number and a time can be uniquely associated with each other, the frame number can be employed as an absolute time.

In the meantime, each medium can manage a real time, for example, the real world time when visual data is sensed at the same time. For example, the real world time is managed as one medium, and a correspondence between the real world time and the local time of visual data may be managed by a media time management table similarly. Alternatively, a relation between the real world time and the absolute time may be managed independent of the real world time. Alternatively, the real world time may be employed as the reference time. In short, the real world time can be managed in the same way as the other media. It is possible to obtain a correspondence with the real world time in place of the time relation in which the media contents are closed. For example, a universal time system having year, month, day (for example, Greenwich Mean Time) can be employed as a real world time.

In FIG. 2, a conversion formula or conversion table between individual media does not appear. This media time management table 101 serves to provide information for batch managing a mutual relation between individual media (including a conversion formula or conversion table). The information that the media time management table 101 should hold may be properly set according to the number of media or media type and the like.

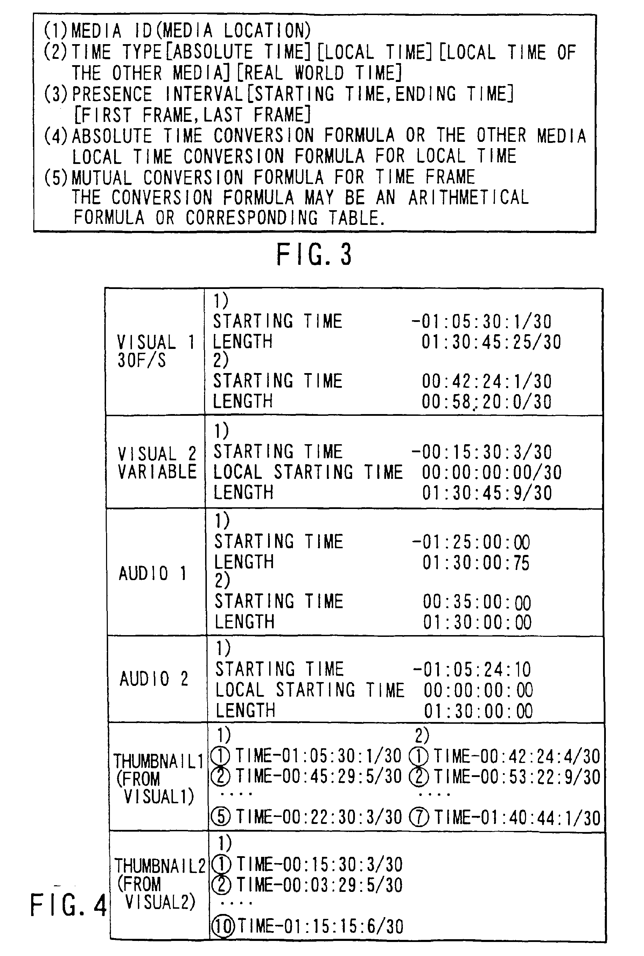

FIG. 3 shows an example of the media time management table for individual media when a media time is actually managed. In this case, the following information is described for individual media.
(1) Media ID
(2) Time type
(3) Presence interval
(4-1) Conversion formula or conversion table between absolute time and the local time
(4-2) Conversion formula or conversion table with the local time of the other medium and the own local time
(5) Conversion formula or conversion table between a time and a frame

The media ID (1) is identification information for identifying media. The media ID may comprise location information indicating a location of the media in addition to a unique name identifying the media.

The time type (2) denotes type of time representative of the media presence time. There are two selections: absolute time and local time. A time measure or frame number can be utilized as a unit. The local time may be not only a local time of one medium but also a local time of the other medium.

The presence interval (3) include a starting time and length according to the time type shown in (2); starting time and ending time; first frame and frame length; or first frame and last frame.

(4-1), (4-2), and (5) may be described and may not be described (provided) as required.

Of course, with respect to all media local times, there may be provided a conversion formula or conversion table (corresponding table) for causing conversion between an absolute time and a local time.

In addition, with respect to a local time without a conversion formula or conversion table for causing absolute time conversion, it is possible to temporarily convert such local time to another local time, and further, convert it to an absolute time.

It is also possible to employ absolute times for all media.

For example, information concerning media attribute, (for example, a variable frame rate) or information concerning a location of media and the like may further be described. The above information may be described in the form of addition to media ID.

Here, in FIG. 4, there is shown an example of describing all media by absolute times.

The starting time and length of each medium are expressed based on an absolute time.

Each medium may have its own local time apart from such absolute time. Such information may be managed simultaneously or a relation between the absolute time and the local time is described, and media may be expressed with a local time.

In addition, in the case where a frame rate is constant, information on the number of frames per second may be recorded. A relation between a time and a frame is important when media is intermediately reproduced. Thus, this relation must be described in the media own data or a relational formula (or table) must be identified. In order to provide an access at a high speed, it is preferable to record this relation not only in the media themselves but also in a management table.

In visual data 1 (204) shown in FIG. 2, visual data sequences are divided into two sections. In FIG. 4, the starting time and length are shown based on an absolute time. Visual data 1 is a fixed frame rate as in MPEG-2, and thus, is described as 30 frames per second.

In addition, in visual data 2 (205) shown in FIG. 2 as well, in FIG. 4, the starting time and length are shown in the absolute time. In the case where visual data 2 has a variable frame rate as in MPEG-4, attribute information of the media may indicate that the frame rate is variable, and the media time management table 101 may explicitly store and manage information on what time each frame corresponds to. In the case of MPEG-4, information concerning a variable frame rate is already recorded in media, and thus, reference may be made to such information. In the case where reference is made from the information contained in media themselves, in many cases, the corresponding portion will be searched at a high speed from the start by seeking it. Depending on application programs, the target intermediate reproduction can be performed with sufficient time. In that case, it is required to manage the starting time of the local time of visual data 2.

In audio data as well, similar information is managed. For example, the starting time and length are managed in the same way as visual data.

A thumbnail is often employed for a user to list the contents of visual data as a still image. This still image (thumbnail) is often smaller than the size of an image for original visual data sampled timely and spatially of the visual data. A time-based correspondence is provided because a thumbnail is produced from original visual data. The thumbnail 1 derived from visual data 1 may be managed in the management table.

In addition, a thumbnail is believed to be a moving image with its very coarse frame rate. However, such thumbnail is not so often employed as a moving image, and in most cases, each frame is fetched and utilized as a still image. Thus, it is general to search a still image of the thumbnail 1 corresponding to a time on visual data 1 or a frame of visual data 1. Alternatively, an application program for reproducing the visual data corresponding to the frame from a thumbnail image is often employed. Therefore, it is convenient to manage the time of each frame for thumbnail 1 as a lookup table. This is because the thumbnail has the smaller number of frames than visual data, and importance is placed to quick computation for reference. There is no problem with a lookup table because an amount of data is not so large. Naturally, in the case where a thumbnail is acquired from visual data 1 with the number of frames with their equal intervals or a time with its equal intervals, a relational formula (conversion formula) between a frame and a time of visual data 1 may be employed.

As shown in FIG. 4, the thumbnail 1 is derives from visual data 1, and thus consists of two divided sequences 1) and 2) in the figure. Thumbnail 1 describes the absolute time at which the frame is recorded. If visual data 1 has its own local time, the time of thumbnail 1 may be recorded with the local time of visual data 1. In that case, it should be explicitly clarified that the local time of visual data 1 is utilized.

In addition, a correspondence with visual data 1 may be obtained with the frame number of visual data 1 instead of time. It is often that thumbnail 1 is managed more easily for an application program when the thumbnail is described with the local time (local frame) of visual data 1 rather than an absolute time. It is general that the thumbnail is written with a local time (local frame). For example, there is an advantage that the target place is searched at a high speed.

Thumbnail 2 is a still image derived from visual data 2, and the same as thumbnail 1 in expression method.

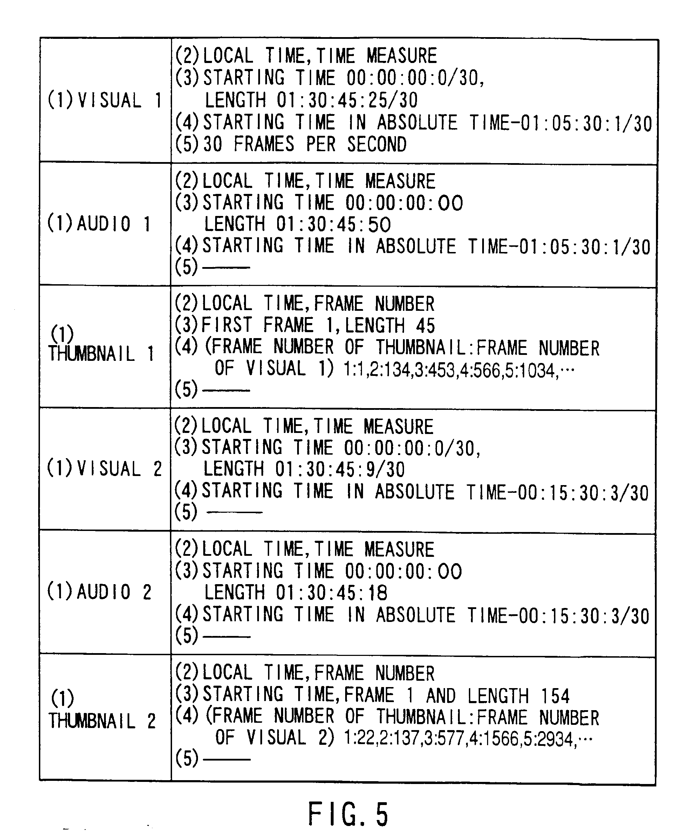

Now, in FIG. 5, there is shown an example of describing all media with their respective local times.

For visual data 1, the starting time and length are described by a time measure. In addition, a relation with an absolute time is described as a starting time in the absolute time. Further, a relation between the time measure and a frame is described as the number of frames per second.

For audio data 1, the starting time and length are described by a time measure. In addition, a relation with an absolute time is described as a starting time in the absolute time.

For thumbnail 1, a first frame and a frame length are described by a frame number. In addition, a relation with the visual data 1 is described as a relation between the frame number in the thumbnail 1 and the frame number in the visual data 1.

For visual data 2, audio data 2, and thumbnail 2, descriptions are given in the same way as described above.

In the case where visual data 2 (205) has a variable frame rate as in MPEG-4, for example, a starting time and a length are described by a time measure, and a relation with an absolute time is described as a starting time in the absolute time in the same way as described above. However, the number of frames per second is not described since the frame rate is variable. In addition, in this case, although audio data 2 is the same as described above, a relation between thumbnail 2 and visual data 2 is described as a relation between the frame number in the thumbnail 1 and the time measure in visual data 2.

Now, a description will be given as to how the inter-media time conversion routine group 102 computes a time between media by employing the media time management table 101.

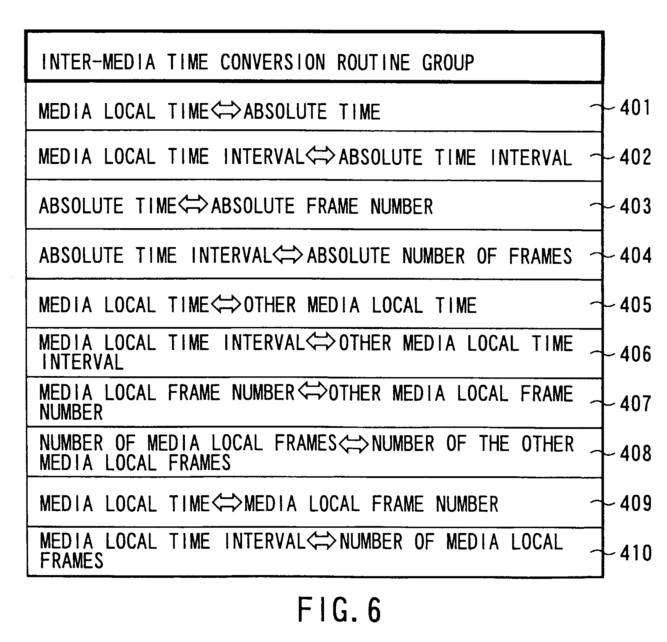

FIG. 6 shows an example of the inter-media time conversion routine group 102.

Conversion of time between media does not require any conversion routine if all conditions are met for an absolute time. However, it may be cumbersome to change a time stamp that has been already given to original media. At this time, managing a mutual relation between a starting time and an ending time as a key by the inter-media time management table may be easier to handle. This management is suitable to a case in which the user does not want to change an original video because a local time stamp does not need to be changed. Thus, an inter-media time conversion routine is required.

A necessary routine is provided case by case, i.e., according to a case in which the routines shown in FIG. 6 is not required at all or a case in which all of part of these routines are required.

A media local time <=> absolute time routine 401 is a mutual conversion routine between a local time of one medium (time measure or frame number) and an absolute time (time measure).

A media local time interval <=> absolute time interval routine 402 is a mutual conversion routine between a local time interval of one medium and an absolute time interval.

An absolute time <=> absolute frame number routine 403 is a mutual conversion routine between an absolute time (time measure) and an absolute time (frame number).

An absolute time interval <=> absolute number of frames routine 404 is a mutual conversion routine between an absolute time interval (in the case where an absolute time is a time measure) and the absolute number of frames (in the case where an absolute time is a frame number).

Media local time <=> the other media local time routine 405 is a mutual conversion routine between a local time (time measure) of one medium and a local time (time measure) of the other medium.

Media local time internal <=> the other media local time routine 406 is a mutual conversion routine between a local time interval of one medium and a local time interval of the other medium.

Media local frame number <=> the other media local frame number routine 407 is a mutual conversion routine between a local time (frame number) of one medium and a local time (frame number) of the other medium.

The number of media local frames <=> the number of the other media local frames routine 408 is a mutual conversion routine between the number of frames in local time of one medium and the number of frames in local time of the other medium.

Media local time <=> media local frame number routine 409 is a mutual conversion routine between a local time (time measure) of one medium and a local time (frame number) of its own medium.

Media local time interval <=> the number of media local frames routine 410 is a mutual conversion routine between a local time interval of one medium and the number of local frames for its own medium.

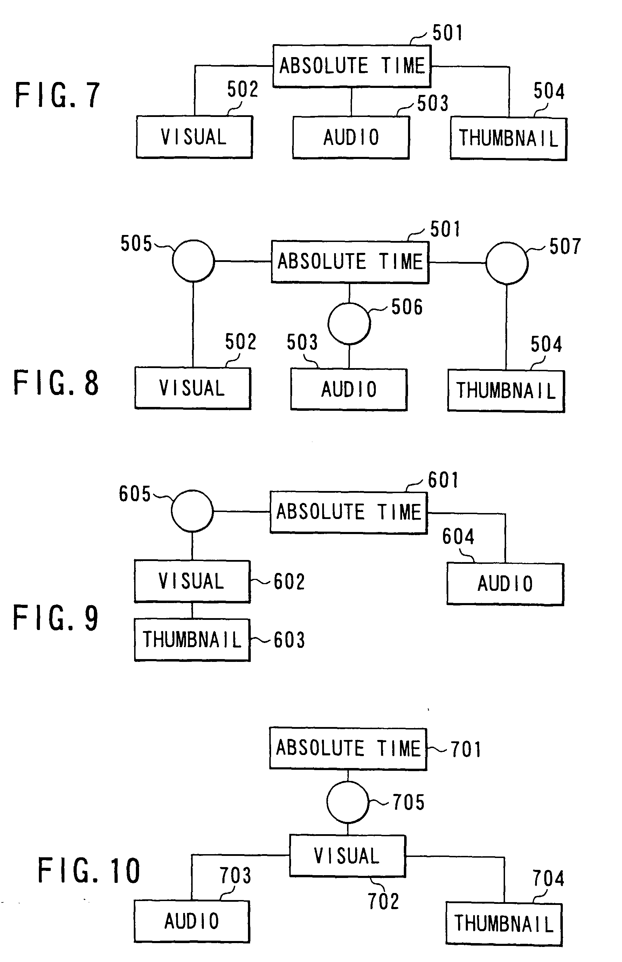

Now, a description is given by way of example of some of various media time management methods with reference to FIG. 7 to FIG. 12.

FIG. 7 shows an example when time stamps of absolute time 501 are employed for all media. In this case, there is an advantage that time synchronization can be grasped momentously without requiring conversion for mutual reference. However, at present, in actual media, it is general that media are managed by a local time specific to the media. Thus, in the case where one medium is accessed, it is required to provide a routine (for example, driver) such that each medium can be reproduced by an instruction from the absolute time 501 or provide a routine for conversion from the absolute time 501 to the local frame or local time of each medium, and to utilize that time or frame to intermediately reproduce each medium.

FIG. 8 shows an example when all media are managed respectively by the media specific local times, and a conversion formula or conversion table for that local time and absolute time is provided. This has an advantage that the local time of each medium may not be rewritten. A conversion formula or the like is displayed by circles 505 to 507 in FIG. 8. Mutual media reference is made through an absolute time 501.

The aforementioned methods shown in FIG. 7 and FIG. 8 are comparatively comprehensive and general management methods.

In an example shown in FIG. 9, audio data 604 employs an absolute time 601, and visual data 602 employs a local time (or the local time of audio data 604 is employed as an absolute time). Here, a circle 605 existing between the absolute time 601 and visual data 602 means a local time conversion formula between the absolute time 601 and visual data 602 or the like. Therefore, the visual data 602 and the audio data 604 are associated with each other via an absolute time. In addition, for thumbnail 603, a time is managed by employing a local time of the visual data 602. Therefore, an access between the visual data 602 and the thumbnail 603 can be mutually provided by utilizing a local time. To access audio data 604 from the local time of thumbnail 603, an absolute time 601 is obtained by employing a conversion formula 605 or the like, and the corresponding portion of the audio data 604 is accessed. An example shown in FIG. 9 is an effective management method in the case where visual data 1 is frequently accessed from a thumbnail.

In an example shown in FIG. 10, visual data 702 is associated with an absolute time 701. In addition, audio data 703 and a thumbnail 704 are time managed by utilizing a local time of visual data 604. A circle 705 is a local time conversion formula between the absolute time 701 and the local time of visual data 702, which is similar to an example shown in FIG. 8. In this case, a conversion formula is not required if the local time of visual data 702 and the absolute time 701 is identical to another. According to this example, there is an advantage that one visual data can be managed by a local time. Another visual data can be associated via an absolute time.

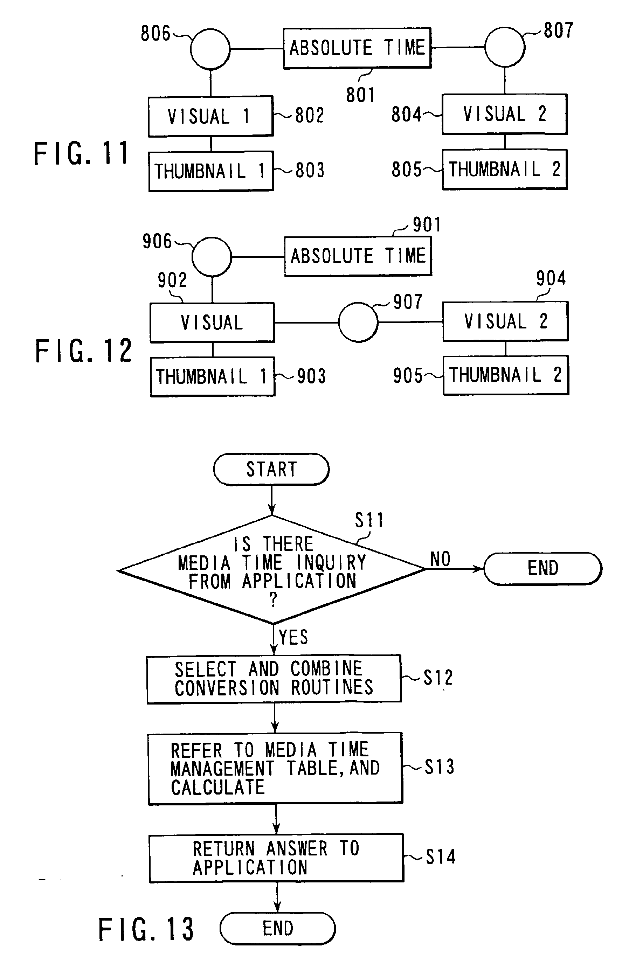

In an example shown in FIG. 11, there is shown a method of managing two items of visual data and respective thumbnails. An absolute time 801 and visual data 1 (802) are associated with each other. A circle 806 is a conversion formula between them. A thumbnail 1 (803) is time managed by utilizing a local time of visual data 1 (802). Similarly, visual data 2 (804) is associated with an absolute time 801, and a circle 807 is defined as a conversion formula between them. A thumbnail 2 (805) is time managed by utilizing a local time of visual data 2 (804). In this example, a thumbnail and visual data are associated with each other by a local time of visual data. Thus, there is an advantage that conversion between comparatively deeply associated two media is not required.

For example, in the case where the local time of the corresponding thumbnail 2 is obtained from the local time of the thumbnail 1, a frame number of visual data 1 is first obtained from a frame number of the thumbnail 1. Then, an absolute time is obtained from the frame number of visual data 1 (alternatively, a time measure of visual data 1 is obtained from the frame number of visual data 1, and an absolute time is obtained from a time measure of visual data 1). Then, a local time of visual data 2 is obtained from the absolute time.

In an example shown in FIG. 12, there exists a mutual conversion formula 907 between a local time of visual data 2 (904) and a local time of visual data 1 (902). When the visual data 1 (902) and the visual data 2 (904) have the same local time, the conversion formula 907 is not required. This example is effective in the case where absolute time conversion is not so frequent.

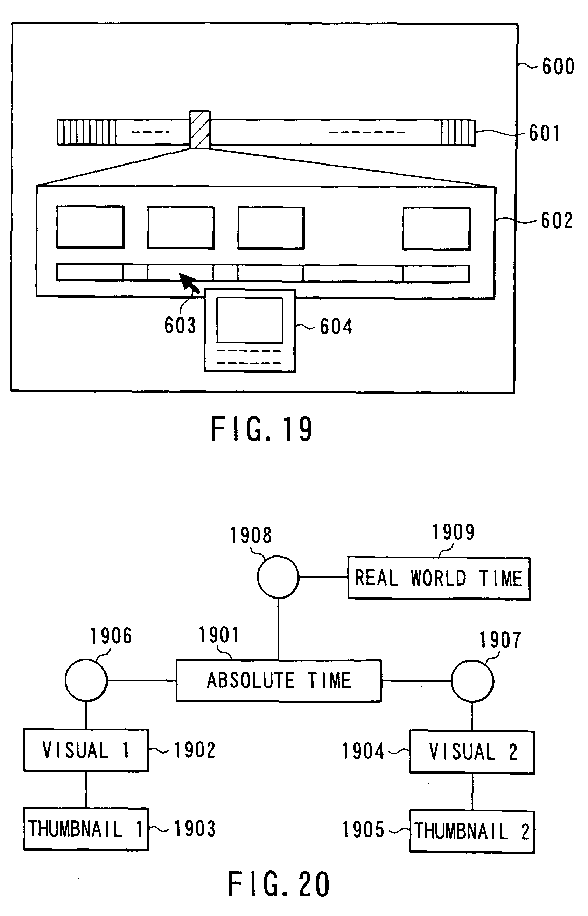

In an example shown in FIG. 20, an absolute time 1901 and a real world time 1909 are associated with each other by means of a conversion formula 1908 or the like. Although an example shown in FIG. 20 is an example based on an example shown in FIG. 11, of course, a variety of modes is considered as to how to utilize the real world time.

FIG. 13 shows an example of processing steps of an inter-media time conversion routine 102 when a media time is inquired from an application program.

First, it is checked whether or not a media time is actually inquired from an application program (step S11). In the case where the time is inquired, the contents of inquiry is analyzed, it is checked as to what is the time or frame number of one medium to be inquired, which is corresponding to the time or frame number of the other medium, optimal conversion routines are selected and combined (step S12). While a media time management table 101 is referred to by employing a routine group, an answer to inquire is computed and prepared (step S13). When the time or frame number is obtained, the inquiry time or frame number is returned to an application program (step S14). If it is not obtained, the fact is returned to the application program.

Although an example of processing when an inquiry of media time from an application program is made has been described with reference to FIG. 13, there will be described how such inquiry is specifically processed by using the media time management information (table) with reference to FIG. 5. Here, let us consider an application program in which a desired thumbnail is selected by a GUI from a screen listed by employing the thumbnail, and a video is reproduced from a portion at which that thumbnail is fetched. First, assume that the listed thumbnail is a thumbnail 1 shown in FIG. 5.

The application program can determine a frame number of the selected thumbnail 1, and inquires a local time of visual data 1 corresponding to that frame number. Here, assume that a local time corresponding to a frame number 5 of the thumbnail 1 is inquired. First, a transform routine (a conversion routine) from the thumbnail 1 to the visual data 1 is searched for, and a transform routine (a conversion routine) required therefor is selected. Assume that a time management table is created so that at least one conversion routine exists. First, a table having an ID of thumbnail 1 is searched for based on an item (1) of FIG. 5. An item (4) in the table corresponding to thumbnail 1 is checked. In this case, a correlation table between the thumbnail 1 and the visual data 1 is defined, and thus, a required conversion routine is generated by using the time management table between the thumbnail 1 and the visual data 1.

Actually, it is possible to eliminate a selection and a combination by providing all conversion routines. Here, assume that an inter-media time conversion routine 102 capable of mutually converting times of any combination is selected for clarity.

The inter-media time conversion routine 102 searches for an ID of item (1) of FIG. 5, and reads time management information on thumbnail 1. From an item (2) of the thumbnail 1 table, it is found the time which manages the media is a local time and the time is described as a frame number. Then, it is determined from item (3) of the thumbnail 1 table, i.e., starting time and length that there is a frame number 5 of the thumbnail exists. If it is found that the frame number 5 of the thumbnail does not exist, the absence of a frame number specified by the application program is notified. In this case, such frame number exists, and thus, the item (4) is then checked. Information 1034 on the frame number of the visual data 1 corresponding to frame number 5 of the thumbnail is acquired.

Then, a table having an ID of visual data 1 is searched for from the item (1) of FIG. 5. When the item (2) in the table of the visual data 1 is checked, it is found that the time which manages the media is a local time and the time is described by a time measure. The obtained information is a frame number, and thus, an item (5) the table is checked. Then, information for performing conversion from the frame number to the time measure is obtained. Information of 30 frame per second is obtained, and the frame number is converted to a time. A frame number "1034" is converted to 34 seconds, 14/30 frames represented by a time measure. This time is answered to the application program. This application program 103 intermediately reproduces the visual data 1 from 34 seconds, 14/30 frames based on this information, whereby the visual data 1 can be reproduced from a time when a desired thumbnail 1 has been acquired.

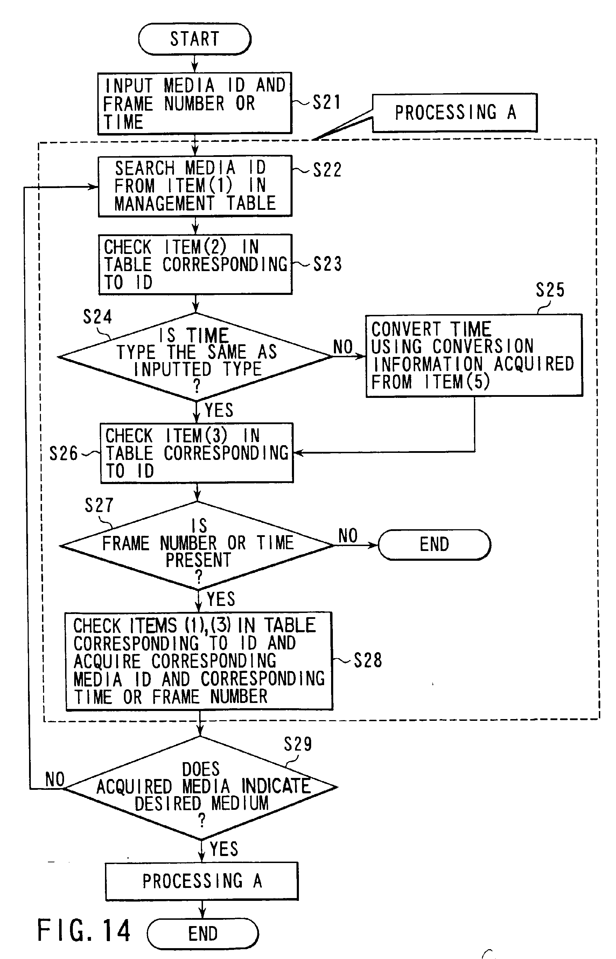

Next, a general description will be given to the processing of an application program in which one medium and one time or frame number are selected, and another medium of the corresponding time is searched for. The processing of the application program is basically the same as that shown in FIG. 13. The inter-media time calculation procedure (step S13) will be generally described with reference to the media time management table shown in FIG. 13. In this case, as described above, assume that all the conversion routines are provided. The calculation method will be described with reference to FIG. 14.

First, an ID of a selected medium and a frame number or time type are inputted (step S21). Then, the ID is searched for from the item (1) of the management table (step S22). In this case, although a flow chart is created on the assumption that the corresponding ID is always present, if such ID does not exist, processing is stopped. Then, the item (2) in the table corresponding to the found ID is checked (step S23). It is checked as to whether or not a time type is the same as the inputted type (step S24). If not, conversion information is acquired from the item (4), and a time is converted to a time of another type (step S25). Although a case where no conversion information is present in the item (4) is not assumed, if such information is not present because of deficiency in management table, processing is stopped. Then, an item (3) of the table is checked (step S26). It is checked as to whether or not the frame number or time type exists (step S27). If not, processing is stopped, and the absence is answered to an application program. Then, the items (1) and (3) are checked, and the corresponding media ID and the corresponding time type or frame number are acquired (step S28). It is checked as to whether or not the acquired media ID indicates a desired medium (step S29). If not, processing "A" is repeated. If it is, processing is stopped, and the time type or frame number corresponding to an application program is answered. Intermediate reproduction can be performed from the corresponding portion of a desired medium by utilizing the answered time or frame number.

Now, a description of an inter-media time conversion routine 102 with its added functions will be given here.

For example, in the case where a frame rate is different from another between media or in the case where the presence of frames is discrete in the target media as in a thumbnail image, there may not exist data on the target media for the corresponding time. In such case, the time or frame number of data that is most closely to the corresponding time may be returned. Alternately, there may be acquired the time or frame not only in the most neighborhood, but also in the most neighborhood in the time-based future direction or in the past direction. Further, the corresponding time can be obtained by additionally providing the related conditions for a plurality of media. For example, if a time is given, the frame of a thumbnail 1 which is the closest to that time is obtained, whereby the target time of the frame may be obtained. By doing this, there can be eliminated a circumference that no data exists in a thumbnail or an event having discrete data structure, and a video or image close to a desired one can be acquired.

Hereinafter, a detailed description will be given by way of example when multimedia contents containing visual data, thumbnail, and audio data are employed.

First, visual data and thumbnail will be described in these association.

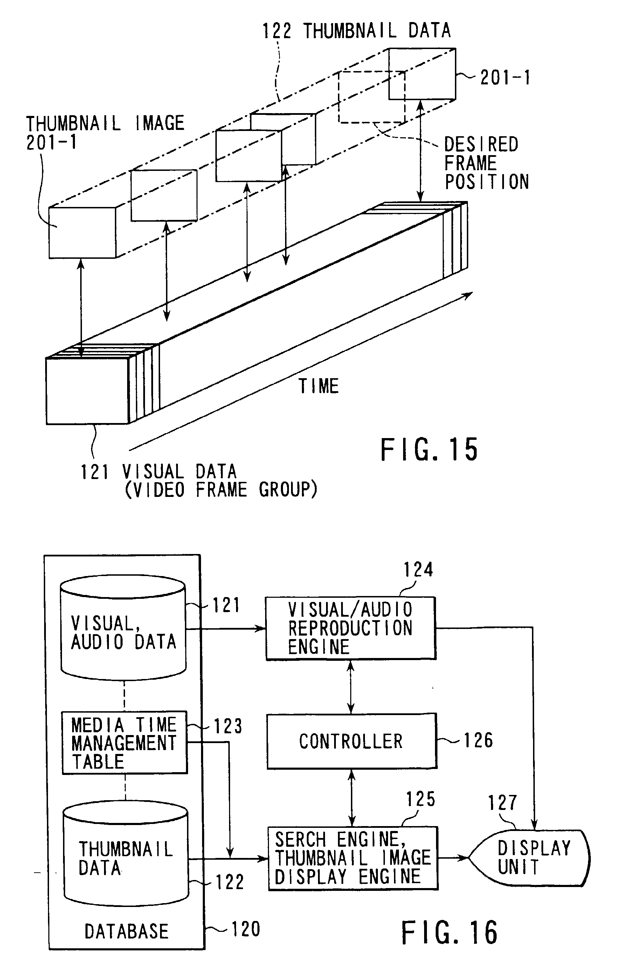

FIG. 15 is a schematic view showing visual data 121 and thumbnail data 122.

Visual data 121 denotes, for example, digital video data or analog video data compressed by MPEG-1, MPEG-2, MPEG-4 or the like, and consists of a set of video frames configuring moving images (video frame group).

Thumbnail data 122 is mainly composed of thumbnail images 201-1 to 201-i. As thumbnail images 201-1 to 201-i, there can be employed a sample image frame obtained by sampling a video frame group configuring visual data 121 with arbitrary time-based intervals and in spatially arbitrary size. For thumbnail data 122, scene change location information or size information indicative of the size of each sample image or the like may be defined as additional image information.

As described above, the position on the time axis of each video frame of visual data 121 is managed, for example, by a local time measure or frame number. Each thumbnail image of thumbnail data 122 is managed, for example, by a local frame number. A relation between a thumbnail and a frame of visual data whose base is the thumbnail is managed by a relation between a local frame number of the thumbnail and a local frame number of the corresponding frame of visual data according to a media time management table, for example.

If the visual data 121 is a compressed data such as the compressed digital video data, each of thumbnail images 201-1 to 201-i of thumbnail data 122 is created by decoding or partially decoding desired frame of visual data 121. In the case where visual data 121 is analog data, the data is digitized, and each of the thumbnail images 201-1 to 202-i may be created.

Here, as an example of the former, a description will be given to a case in which visual data 121 is MPEG-2 compressed video data. In this case, visual data 121 that is MPEG-2 compressed video data is decoded, and, for example, the data is sampled for every 30 frames and reduced by 1/8 in lateral and longitudinal directions, thereby creating a thumbnail image group. In addition, in stead of creating a thumbnail image group by fixed time sampling and fixed space sampling in this way, these images are changed as required, whereby a thumbnail image group can be created. It is effective to coarsely cause sampling in time direction where a scene change is small, and to finely cause sampling in time direction where a scene change is large.

In MPEG-2 compressed video data, a frame compressed based on only intra-frame information called I picture (intra-frame encoding frame) is intermittently present. Decoding of I picture is easy because I picture is not compressed by employing correlation between frames unlike P picture (forward prediction encoded frame) or B picture (bi-direction prediction encoded frame). Thus, thumbnail images sampled in time and spatially can be easily obtained by decoding only I picture, and moreover, decoding only DC component of a DCT (discrete cosine conversion) coefficient of I picture.

Although it is not guaranteed that I picture is always present with constant frame intervals, a method using I picture is effective to create a thumbnail image group sampled in time and spatially at a speed equal to or greater than a visual data rate from visual data compressed by MPEG-2.

Thus, a method of creating a thumbnail image group from I picture makes it possible to perform processing with only the software on PC without employing specific hardware because of its small amount of processing. In addition, when a thumbnail image group is created from visual data 121 obtained via a network, a problem with increased traffic can be easily avoided by employing I picture.

On the other hand, the sampling in the spatial direction of visual data 121 in creating a thumbnail image group does not need to be fixed, and can be variable as required. In some cases, a particularly important screen frame not only may be reduced, but also may be enlarged. Thumbnail images 201-1 to 201-i in thumbnail data 122 contain its attribute information, and the attribute information contains the size of the thumbnail image, thus, a thumbnail image can be employed as required during search or display after being converted to a desired size.

Next, FIG. 16 shows an example of configuration of a multimedia information processing system handling a set of visual data, audio data, and thumbnail.

This system comprises a database 120,
a visual/audio data reproduction engine 124,
a search/thumbnail-image-display engine 125,
a controller 126, and a display unit 127. Although the visual/audio data reproduction engine 124 is described as one block for the purpose of explanation, one block or an individual block may be actually employed.

The database 120 stores visual data 121, thumbnail data 122, audio data 121, and a media time management table 123 for associating these time relations with each other. In the figure, visual data and audio data are conveniently described in collective manner.

The database 120 may be intensively disposed at one site or may be disposed at plural sites. In short, access may be provided by the visual/audio data reproduction engine 124 or the search/thumbnail-image-display engine 125. Visual data 121, thumbnail data 122, and audio data 121 may be stored in separate media or may be stored in the same medium. As a medium, for example, DVD or the like is employed. In addition, these data may be transmitted from a network such as internet.

Hereinafter, visual data and thumbnail will be mainly described, and the description of audio data is omitted here. In addition, a visual/audio data reproduction engine will be described by being referred to as a video display engine for the convenience of explanation.

A video display engine 124 performs processing for displaying visual data 121 on the display unit 127 under the control of the controller 126. Further, the video display engine 124 performs processing for displaying a searched portion of visual data 121 on the display unit 127 in the case where visual data 121 is searched by means of the search/thumbnail-image-display engine 125 based on thumbnail data 122.

The search/thumbnail-image-display engine 125 searches suitable thumbnail images in the vicinity of a desired frame of visual data 121 from thumbnail data 122 under the control of the controller 126, displays these images as a representative frame on the display unit 127, and searches visual data 121 via the controller 126 by employing thumbnail data 122.

Here, a description will be given to a difference between the search/thumbnail-image-display engine 125 and the video display engine 124. The former operates a thumbnail image group in thumbnail data 122 with its small capacity. Thus, even if the former engine is installed as software on PC, a sufficient processing speed can be obtained.

On the other hand, the latter operates visual data 121 that is MPEG-2 video data or analog video data, and thus, special hardware is often installed. Specifically, in the case where visual data 121 is MPEG-2 compressed video data, a decode board (MPEG-2 decoder) is employed for the video display engine 124. In addition, in the case where visual data 121 is an analog video signal, a video reproduction device such as VCR capable of controlling fast feed or rewinding are employed as the video display engine 124.

In the case where visual data 121 is MPEG-1 or MPEG-4 compressed video data, it is possible to install a video display engine 124 even using the software on PC, and there is no need to separate the engine as a system architecture.

A connection of the upper and lower broken lines in the media time management table 123 is conceptual, visual/audio data 121 and thumbnail data 122 do not need to be physically connected to each other. Therefore, a medium in which visual/audio data 121 is stored may be stored in the same cabinet as the video display engine 124. In addition, a medium in which thumbnail data 122 is stored may be stored in the same cabinet as the search/thumbnail-image-display engine 125.

Even if a medium in which visual/audio data 121 is stored; the video display engine 124; a medium in which thumbnail data 122 is stored; and the search/thumbnail-image-display engine 125 are present at positions distant from each other, it is sufficient if a 10 Mbps network with its comparatively small transmission capacity, for example, is employed as a line for connecting the medium in which thumbnail data 122 is stored and the search/thumbnail-image-display engine 125. On the other hand, as a line for connecting the medium in which visual data 121 is stored and the video display engine 124 to each other, it is required to provide a line with 100 Mbps or more depending on media type.

A system architecture as shown in FIG. 16 is advantageous in that interactive operation can be performed comfortably in order to perform search targeted for thumbnail data 102, and entire traffic can be reduced.

In addition, although the foregoing description has been given by way of exemplifying search, it is, of course, possible to perform control such as causing intermediate reproduction from a frame of the searched visual data or the closest I-picture earlier than such frame.

Further, although the foregoing description has been given to a set of visual data, audio data, and thumbnail, it is, of course, possible to handle multimedia consisting of plural sets of visual data, audio data, and thumbnail.

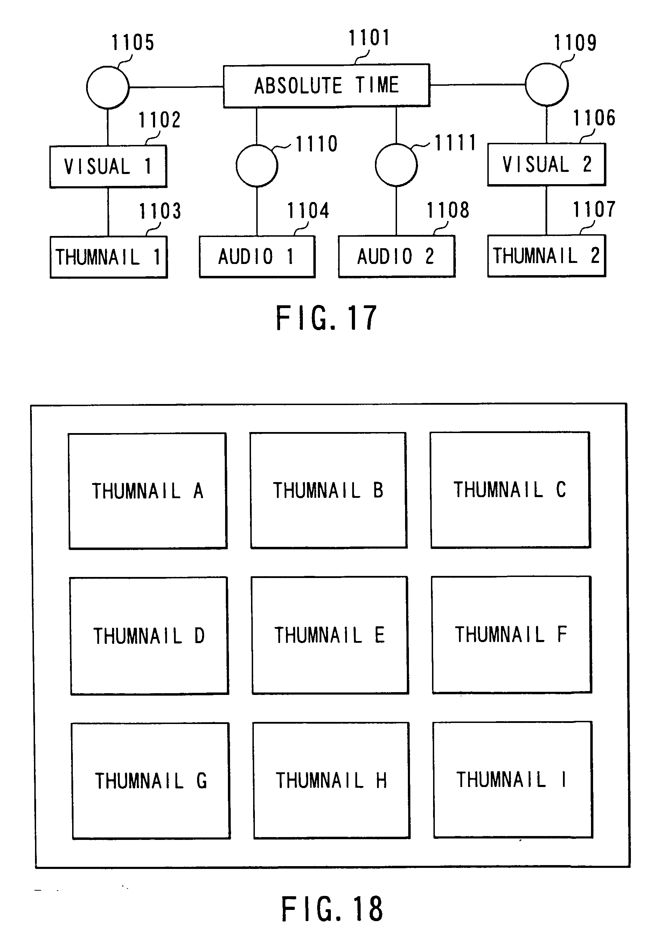

Now, FIG. 17 shows an example of time management for typical multimedia contents.

The multimedia contents consist of visual data 1 (1102) and visual data 2 (1106); a thumbnail 1 (1103) and a thumbnail 2 (1107) which are derived from the respective visual data 1 and 2; and audio data 1 (1104) for visual data 1 (1102) and audio data 2 (1107) for visual data 1 (1106). For a relation between visual data 1 and visual data 2, for example, one object is sensed simultaneously by two cameras. Thumbnail 1 (1103) utilizes a local time of visual data 1 (1102), and thumbnail 2 (1107) utilizes a local time of visual data 2 (1106). Otherwise, each local time is provided, and a mutual conversion formula with an absolute time or the like is managed. The mutual conversion formulas include circles 1105, 1109, 1110, and 1111.

Here, let us consider an application program in which visual data is intermediately reproduced from a desired position based on a specified frame of a thumbnail.

Further, let us consider an application program in which a key frame of a highlight scene is fetched as a thumbnail from videos which are obtained by two pairs of camera/microphone at different positions, and the videos can be randomly accessed based on the thumbnail list. Assume that the local times of visual data and audio data obtained by one camera/microphone pair are the same. However, assume that a local time of another pair of camera/microphone is not synchronized with the local time of the above pair because switches are pressed separately. A plurality of thumbnail images are created from key frames of highlight scenes selected from the videos, and the frame numbers at those times are acquired. Data obtained by a first pair of camera and microphone includes visual data 1 and audio data 1. The thumbnail acquired from the visual data 1 is defined as thumbnail 1. Data obtained by a second pair of camera and microphone includes visual data 2 and audio data 2. The thumbnail acquired from the visual data 2 is defined as thumbnail 2.

FIG. 18 shows an example of GUI utilizing a thumbnail of the above application program.

On this GUI screen, highlight scenes are collected from visual data 1, and the images are listed as a thumbnail. Thumbnail 1 employs a local time of visual data 1, and the frame number and time of visual data 1 can be referred to. Namely, such information is managed by a media time management table 101.

In this GUI, assume that visual data 1 and audio data 1 are intermediately reproduced from a position at which that thumbnail A has been created when a thumbnail A is clicked with a mouse. A time acquisition method will be described. The frame number or time of visual data 1 corresponding to thumbnail A can be easily recognized since the visual data 1 and thumbnail A utilize the same local time. Thus, intermediate reproduction is performed by employing the video data 1 and local time thereof. On the other hand, it is possible to obtain a desired time (local time) of audio data 1 by converting the local time specified for visual data 1 to an absolute time, and further, converting the absolute time to a local time of audio data 1. An application program reproduces audio data 1 from that local time in the same way as intermediate reproduction of visual data 1.

Next, when an attempt is made to intermediately reproduce visual data 2 from a position at which that thumbnail A has been created, the converted absolute time is further converted to the local time of visual data 2, and visual data 2 may be intermediately reproduced by employing that time. Similarly, the absolute time is converted to a local time of audio data 2, and the audio data 2 is intermediately reproduced simultaneously.

Further, the highlight scene in visual data 2 having the closest timing to thumbnail A is obtained by selecting an image from thumbnail 2 showing highlights corresponding to the local time and frame number of visual data 2 (closest local time and frame number if there is no corresponding local time and frame number).

FIG. 19 shows an example of another GUI utilizing a thumbnail. In FIG. 19, the entire visual data is displayed by a single bar 601 extending in time axis direction, and further, is displayed by a bar 602 in which a specified portion of the bar 601 has been expanded. At the expanded bar 602, a thumbnail image acquired from a cut point frame is displayed as a header. When a mouse cursor 603 is further pointed onto the expanded bar 602, the closest thumbnail image 604 is selected in consideration of the cut point position, and can be displayed as an icon. This processing can be performed at a high speed. Thus, an icon image can be displayed dynamically in real time by sliding the mouse icon horizontally.

Now, a description will be given to a method of providing multimedia data or media time management table.

In the case where multimedia data created by the creator is provided for a user, it is required to provide multimedia data from the creator to the user in any method.

The above multimedia data are provided in various ways exemplified below:
(1) the multimedia data and media time management table are recorded in one or a plurality of recording media, and are provided simultaneously (a media time conversion routine or application program is additionally provided or a general-purpose routine or application program is used);
(2) the multimedia data, media time management table, and media time conversion routine are recorded in one or a plurality of recording media, and are provided simultaneously (a media time conversion routine or application program is additionally provided or a general-purpose routine or application program is used);
(3) the multimedia data, media time management table, media time conversion routine, and application program are recorded in one or a plurality of recording media, and are provided simultaneously (a driver or the like is additionally provided or a general-purpose driver is used); and
(4) the multimedia data, media time management table, media time conversion routine, application program, and driver are recorded in one or a plurality of recording media, and are provided simultaneously.

According to the present invention, there is provided a media time management information describing method for describing media time management information of a plurality of media, the method comprising describing first information indicating a type of time which manages each of the plurality of media; describing second information indicating a time period in which data of each of the plurality of media exits; and describing third information indicating a relation between times of the plurality of media or a relation between a time of each of the plurality of media and a reference time common to the plurality of media.

The first information may comprise a local time specific to each of the plurality of media; and the third information may comprise at least one of a conversion formula or conversion table indicating a conversion between the local times of the plurality of media and a conversion formula or conversion table indicating a conversion between the local time of each of the plurality of media and the reference time.

With respect to at least one of the plurality of media, a mutual conversion formula or conversion table between the media time and media data access point may be further described.

With respect to each of the plurality of media, attribute information on the media (for example, name specific to the media, location of the media, or ID information on the media) may be further described.

As the reference time, there may be employed a time scale different from any of the local times of the plurality of media.

As the reference time, there may be employed any of the local times of the plurality of media.

A minimum unit of the reference time may be determined in accordance with a minimum unit of the local times of the plurality of media.

A time measure may be employed as the reference time.

The plurality of media may comprise one of visual data, audio data associated with the visual data, and a thumbnail associated with the visual data.

As the local time, a time measure may be employed for media that is visual data or audio data; and a frame number may be employed for media that is a thumbnail.

With respect to media that is visual data or audio data, there may be described a mutual conversion formula or conversion table between its own time measure and the time measure at the reference time. With respect to media that is a thumbnail, there may be described a mutual conversion formula or conversion table between its own frame number and frame number in the associated visual data.

According to the present invention, there is provided an article of manufacture comprising a computer readable storing medium, the computer readable storing medium comprising a plurality of media data; and media time management information of the plurality of media, the information comprising first information indicating a type of time which manages each of the plurality of media; second information indicating a time period in which data of each of the plurality of media exits; and third information indicating a relation between times of the plurality of media or a relation between a time of each of the plurality of media and a reference time common to the plurality of media.

The article of manufacture may further comprise a computer program for mutually converting times of the plurality of media by using the media time management information.

According to the present invention, there is provided a multimedia information processing apparatus for managing a plurality of media, the apparatus comprises a manager configured to collectively manage first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media.

The first information may comprise a local time specific to each of the plurality of media; and the third information may comprise at least one of a conversion formula or conversion table indicating a conversion between the local times of the plurality of media and a conversion formula or conversion table indicating a conversion between the local time of each of the plurality of media and the reference time.

There may be further provided a converter configured to mutually convert times of the plurality of media by using the first information, the second information, and the third information.

There may be further provided a receiver configured to receive an operation request for one of the plurality of media, thereby executing the request, wherein the converter converts a local time of the one of the plurality of media to another local time of another of the plurality of media by which time the request can be executed when the request cannot be executed by using the local time of the one of the plurality of media.

According to the present invention, there is provided a multimedia information processing method using a multimedia information processing apparatus comprising a media time management table storing first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media, the method comprising receiving an operation request for one of the plurality of media, thereby executing the request; and converting a local time of the one of the plurality of media to another local time of another of the plurality of media by which time the request can be executed when the request cannot be executed by using the local time of the one of the plurality of media.

The first information may include a local time specific to each of the plurality of media; and the third information may comprise at least one of a conversion formula or conversion table indicating a conversion between the local times of the plurality of media and a conversion formula or conversion table indicating a conversion between the local time of each of the plurality of media and the reference time.

The plurality of media may include at least visual data, and a thumbnail containing a plurality of still images obtained from the visual data. The request may be a request for intermediately reproducing the visual data from the corresponding part of the visual data corresponding to one specified by being selected from among a plurality of still images contained in the thumbnail. In order to make it available for use in execution of the request, reference may be made to the media time management table, and the local time using the time measure for the corresponding visual data may be obtained from the still image frame number of the selected and specified thumbnail.

The plurality of media may include first visual data, a first thumbnail containing a plurality of still images obtained from the first visual data, second visual data associated via the first visual data and the reference time, and a second thumbnail containing a plurality of still images obtained from the second visual data. The request may be a request for intermediately reproducing the second visual data from the corresponding part of the second visual data corresponding to one specified by being selected from a plurality of still images contained in the first thumbnail. In order to make it available for use in execution of the request, reference may be made to the media time management table, and a local time using the time measure for the corresponding first visual data may be obtained from the frame number of a still image of the first thumbnail thus selected and specified. Reference may be made to the media time management table, and a reference time may be obtained from the local time using the time measure for the thus obtained first visual data. Reference may be made to the media time management table, and a local time using the time measure for the corresponding second visual data may be obtained from the reference time thus obtained.

According to the present invention, there is provided an article of manufacture comprising a computer readable storing medium storing a computer program for controlling a multimedia information processing apparatus comprising a media time management table storing first information indicating a type of time which manages each of the plurality of media, second information indicating a time period in which data of each of the plurality of media exits, and third information indicating a relation between times of the plurality of media or a relation between a time of each of the plurality of media and a reference time common to the plurality of media, the computer program comprising a program code for receiving an operation request for one of the plurality of media, thereby executing the request; and a program code for converting a local time of the one of the plurality of media to another local time of another of the plurality of media by which time the request can be executed when the request cannot be executed by using the local time of the one of the plurality of media.

According to the present invention, in order to facilitate synchronization with a variety of media, media time management information (table) for describing a relative relation between times of media is created in advance, and collective management is performed. The media time management information (table) has at least one reference time scale (a scale equivalent to time will suffice). The time management table comprises ID information for identifying media, a type of time managing media, a presence interval of data of media managed by the type of time, a mutual conversion formula (method) between the local time and the absolute time if required in the case where the type of time is a local time specific to media instead of the entire reference absolute time, and a mutual conversion formula (method) between the time and the frame number if necessary. There can be obtained information with which a point capable of accessing visual data, audio data, still image or the like can be referred to from time or frame numbers. In this manner, direct access can be provided from an arbitrary time or an arbitrary frame number of arbitrary media. In addition, from one media specific time or frame number, other media time or frame number associated with the time identical thereto or corresponding thereto can be directly accessed, thereby making it possible to easily synchronize and reproduce a plurality of media.

In the meantime, for example, the frame number is suitable for associating visual data with a still image fetched from the visual data. In the case where a correlation between visual data and audio data is obtained, the audio data does not have a frame concept, and thus, a time measure is more suitable. Since MPEG-2 is a fixed frame rate, mapping between the frame number and the time measure is easy. MPEG-4 permits a variable frame rate, and mapping between the frame number and the time measure is not easy. In addition, it is required to handle multimedia contents while a plurality of items of visual data, a plurality of items of audio data, and a plurality of items of still images are synchronized with each other simultaneously. For example, in the case where a baseball live image is acquired by two cameras and two microphone, thereby fetching a highlight scene as a still image from each of videos, it is required to mutually associate events with each other. Such association is not simple in consideration of a case in which two cameras are not actuated simultaneously or a case in which this live image is acquired intermittently. Further, how to associate a plurality of still images with each other is a problem concerning a data management method. In addition, depending on application programs, there are assumed a variety of requests; a request for handling individual media with a media specific local time or a request for handling them with a frame number instead of a time measure. In this respect, according to the present invention, a relation between one reference time and a local time of individual media is described, whereby the mutual relation can be easily fetched. With respect to time management as well, a reference time, a local time (time measure), and a local time (frame number) can be freely utilized according to a request for individual application program. In any case, reference is made to at least a reference time, thereby enabling mutual conversion.

In this manner, according to the present invention, it is possible to easily convert mutual time stamps of multimedia in which there are combined media such as visual data having a variety of plural different time stamps; a still image, audio data or the like. In addition, the access points of media required for operation such as intermediate reproduction can be recognized efficiently, and synchronous reproduction can be performed.

The present invention according to the apparatus can be accepted as an invention according to the method; and the present invention according to the method can be accepted as an invention according to the apparatus.

The above function each can be provided as software.

In addition, the present invention according to the apparatus or method can be accepted as a computer readable recording media for recording a program for causing a computer to execute the steps corresponding to the invention (or causing the computer to function as means corresponding to the invention; or causing the computer to provide a function corresponding to the invention). Part or whole of the multimedia data may be provided by communication media.

## Claims

1. A media time management information describing method for describing media time management information of a plurality of media, said method characterized by comprising:
describing first information indicating a type of time which manages each of said plurality of media;
describing second information indicating a time period in which data of each of said plurality of media exits; and
describing third information indicating a relation between times of said plurality of media or a relation between a time of each of said plurality of media and a reference time common to said plurality of media.

2. The method according to claim 1, characterized in that
said first information comprises a local time specific to each of said plurality of media; and
said third information comprises at least one of a conversion formula or conversion table indicating a conversion between the local times of said plurality of media and a conversion formula or conversion table indicating a conversion between the local time of each of said plurality of media and the reference time.

3. The method according to claim 1, characterized by further describing attribute information of each of said plurality of media.

4. The method according to claim 1, characterized in that a minimum unit of said reference time is determined in accordance with a minimum unit of the local times of said plurality of media.

5. The method according to claim 1, characterized in that said plurality of media includes visual data, audio data associated with the visual data, and a thumbnail associated with the visual data.

6. An article of manufacture comprising a computer readable storing medium, the computer readable storing medium characterized by comprising:
a plurality of media data; and
media time management information of said plurality of media, the information characterized by comprising:
first information indicating a type of time which manages each of said plurality of media;
second information indicating a time period in which data of each of said plurality of media exits; and
third information indicating a relation between times of said plurality of media or a relation between a time of each of said plurality of media and a reference time common to said plurality of media.

7. The article of manufacture according to claim 6, characterized in that said computer readable storing medium further comprising:
a computer program configured to convert times of said plurality of media by using the media time management information.

8. A multimedia information processing apparatus for managing a plurality of media, said apparatus characterize by comprising:
a manager configured to manage media time management information of said plurality of media, the information comprising first information indicating a type of time which manages each of said plurality of media, second information indicating a time period in which data of each of said plurality of media exits, and third information indicating a relation between times of said plurality of media or a relation between a time of each of said plurality of media and a reference time common to said plurality of media; and
a converter configured to convert times of said plurality of media by using the media time management information.

9. The apparatus according to claim 8, characterized in that
said first information comprises a local time specific to each of said plurality of media; and
said third information comprises at least one of a conversion formula or conversion table indicating a conversion between the local times of said plurality of media and a conversion formula or conversion table indicating a conversion between the local time of each of said plurality of media and the reference time, and said converter converts times of said plurality of media by using the conversion formula or the conversion table.

10. The apparatus according to claim 9, characterized by further comprising a receiver configured to receive an operation request for one of said plurality of media, and an executor configured to execute the request, and characterized in that said converter converts a local time of said one of said plurality of media to another local time of another of said plurality of media when the request cannot be executed by using the local time of said one of said plurality of media.

11. A multimedia information processing method using media time management information comprising first information indicating a type of time which manages each of said plurality of media, second information indicating a time period in which data of each of said plurality of media exits, and third information indicating a relation between times of said plurality of media or a relation between a time of each of said plurality of media and a reference time common to said plurality of media, the method characterized by comprising:
receiving an operation request for one of said plurality of media;
converting a local time of said one of said plurality of media to another local time of another of said plurality of media when the request cannot be executed by using the local time of said one of said plurality of media; and
executing the request.

12. The method according to claim 11, characterized in that
said first information comprises a local time specific to each of said plurality of media; and
said third information comprises at least one of a conversion formula or conversion table indicating a conversion between the local times of said plurality of media and a conversion formula or conversion table indicating a conversion between the local time of each of said plurality of media and the reference time and; and
said converting is based on the conversion formula or the conversion table.

13. An article of manufacture comprising a computer readable storing medium storing a computer program for processing data by using media time management information comprising first information indicating a type of time which manages each of said plurality of media, second information indicating a time period in which data of each of said plurality of media exits, and third information indicating a relation between times of said plurality of media or a relation between a time of each of said plurality of media and a reference time common to said plurality of media, the computer program characterized by comprising:
a program code for receiving an operation request for one of said plurality of media;
a program code for converting a local time of said one of said plurality of media to another local time of another of said plurality of media when the request cannot be executed by using the local time of said one of said plurality of media; and
a program code for executing the request.
